# EUROPEAN PATENT APPLICATION

(11) **EP 2 461 519 A1**
(43) Date of publication of application: **06.06.2012**
(21) Application number: 11746857.9
(22) Date of filing: 25.02.2011
(51) Int. Cl.: H04L 12/24

(54) **METHOD AND APPARATUS FOR MANAGING SELF-HEALING FUNCTION IN WIRELESS NETWORK**

(30) Priority: 26.02.2010 CN 201010122065
(71) Applicant: ZTE Corporation, Shenzhen, Guangdong 518057 (CN)
(72) Inventor: LIU, Shenghao, Shenzhen Guangdong 518057 (CN); GAO, Yanqin, Shenzhen Guangdong 518057 (CN); DU, Yongsheng, Shenzhen Guangdong 518057 (CN)
(74) Representative: Manitz, Finsterwald & Partner GbR
(86) International application number: PCT/CN2011/071321
(87) International publication number: WO 2011/103815

(57) **Abstract**

The present invention provides a method and an apparatus for managing self-healing function in the wireless network. The method relates to a radio communication field and solves the problems that a use state of the self-healing function can not be managed in the existing technology. The method includes: a Network Management System (NMS) configuring a resource model attribute of the wireless network, and controlling the on-off of self-healing function through the resource model attribute. The technical scheme provided by the present invention can be applied in the fields of the maintenance of the network.

## Description

### Technical Field

The present invention relates to a radio communication field, and more especially, to a method and an apparatus for managing self-healing function in a wireless network.

### Background of the Prior art

In a mobile communication system, the operational maintenance management generates a self-maintenance requirement to reduce the maintenance costs, that is, the system automatically handles the common problems and reduces the human involvements. The 3rd Generation Partnership Project (3GPP) proposes a Self-Organizing Network (SON) in the LTE stage, which comprises functions of self-configuring, self-optimizing, self-healing, and energy-saving and so on. The self-healing function can implement to automatically detect a failure, and segregate and recover the failure in time.

The typical self-healing application scenarios will be introduced below, which comprises: a Cell Outage Compensation (COC), a network element software self-recovering and failure board self-healing.

COC: a system gathers related information after receiving an out-of-service warning from a cell and performs the automatic analysis, and if the conclusion of analysis is a cell failure, the system will automatically trigger a COC process; and the COC process comprises: automatically blocking the cell, and modifying the parameters of a neighboring cell for compensating the coverage of the cell, thus the network parameters will be automatically modified at the moment, backing up the parameters related to the cell before performing the modification, and identify that the cell has been compensated after completing the modification; and the system will activate the cell again after the cell failure is solved and recover the previous configuration.

Network element software self-recovering: a system judges that a failure is caused by an error of the network element software version, and triggers a self-recovering action of the software version at the moment, that is, a self-healing function will update the software version of the system module after analyzing that the failure is caused by the problem of software version, and the system parameters will be automatically modified at the moment.

Failure board self-healing: a system automatically triggers a board self-healing function after receiving a board failure warning; if the board has redundancy, the failure board is firstly blocked, and then the system automatically switches to the redundant board; and if the single board has no redundancy, the the failure board is blocked automatically, and the associated influence of failure is avoided.

As can be seen from the above examples of self-healing function scenarios, the self-healing function will have an influence on the current network configuration and intellectually modify the network parameters and system parameters. Though the self-healing function is generally an experience summary of resolving the common failures and the results can be controlled commonly, the full automation also has certain risks.

In the areas to which the operators pay more attentions, the operational maintenance manpower is relatively sufficient and the manual failure troubleshooting is more reliable than a self-healing function, thus the operators need to disable the self-healing function at this moment. When the self-healing function is enabled, if a network element failure is handled automatically and successfully by the self-healing function, the network element will not report a warning any more and screen the related warnings objectively, which makes the operational maintenance personnel can not learn more about the network operation condition, and it is not convenient for performing maintenance and optimization on the network. However, there is no method in the existing technology for implementing that the operational maintenance personnel perform the management on the self-healing function.

### Summary of the Invention

The present invention provides a method and an apparatus for managing self-healing function in the wireless network, which can control a use state of the self-healing function.

To achieve the above purpose of the invention, the present invention provides a technical scheme as follows:
a method for managing self-healing function in a wireless network, which comprises:
   a Network Management System (NMS) configuring a resource model attribute of the wireless network, and controlling the on-off of the self-healing function through the resource model attribute.

The method can further be **characterized in that**:
the step of the NMS configuring the resource model attribute of the wireless network comprises: the NMS configuring a corresponding resource model attribute for a network element and/or subnet in the wireless network.

The method can further be **characterized in that**:
the step of the NMS controlling the on-off of self-healing function through the resource model attribute comprises:
   the NMS informing a Network Element Management System (EMS) to modify a use state of the self-healing function;
   if what the NMS modifies is a use state of the self-healing function in a network element, the EMS informing the network element to modify the use state of the self-healing function; and if what the NMS modifies is a use state modification of the self-healing function in a subnet, the EMS informing the subnet to modify the use state of the self-healing function;
   after the network element or subnet completes the modification, the EMS informing the NMS of update results.

The method can further be **characterized in that**:
the step of the NMS configuring the resource model attribute of the wireless network comprises: configuring a self-healing function Enable attribute which has two values or recording a self-healing function permission list of the self-healing function which is in an enabled state.

The method can further be **characterized in that**:
when the NMS adopts the self-healing function Enable attribute to perform management, the step of the NMS controlling the on-off of self-healing function through the resource model attribute comprises: the NMS modifying the use state of the self-healing function through informing the EMS to replace a current value of the self-healing function Enable attribute with the other value;
when the NMS adopts the self-healing function permission list to perform management, the step of the NMS controlling the on-off of self-healing function through the resource model attribute comprises: the NMS modifying the use state of the self-healing function through informing the EMS to add or delete the self-healing functions in the self-healing function permission list.

An apparatus for managing self-healing function in a wireless network, which comprises:
a configuration module, which is configured to: configure a resource model attribute of the wireless network; and
a management module, which is configured to: control on-off of self-healing function through the resource model attribute.

The apparatus can further be **characterized in that**:
the configuration module is configured to: configure a corresponding resource model attribute for a network element and/or subnet in the wireless network.

The apparatus can further be **characterized in that**:
the management module is configured to: inform an EMS to modify a use state of the self-healing function, and receive a updated use state of the self-healing function from the EMS after the EMS informs the corresponding one or multiple network elements to complete the modifications.

The apparatus can further be **characterized in that**:
the configuration module is configured to configure the resource model attribute through the following ways: configuring a self-healing function Enable attribute which has two values or recording a self-healing function permission list of the self-healing function which is in an enabled state.

The apparatus can further be **characterized in that**:
if the resource model attribute configured by the configuration module is a self-healing function Enable attribute, the management module is configured to: modify the use state of the self-healing function through informing the EMS to replace a current value of the self-healing function Enable attribute with the other value;
if the resource model attribute configured by the configuration module is a self-healing function permission list, the management module is configured to: modify the use state of the self-healing function through informing the EMS to add or delete the self-healing functions in the self-healing function permission list.

With the technical scheme provided by the present invention, a user can flexibly control the self-healing functions of the follow-up mobile network elements/mobile networks by managing the self-healing function attribute in a radio resource model, which makes the device function adapt to different kinds of application scenarios, satisfies different requirements of operational maintenance for the users, and has little influence on the existing wireless network management system of the 3GPP.

### Brief Description of Drawings

FIG. 1 is a flow chart of the method for managing self-healing function according to the example 1;
FIG. 2 is a flow chart of the method for managing self-healing function according to the example 2;
FIG. 3 is a flow chart of the method for managing self-healing function according to the example 3;
FIG. 4 is a flow chart of the method for managing self-healing function according to the example 4;
FIG. 5 is a flow chart of the method for managing self-healing function according to the example 5;
FIG. 6 is a flow chart of the method for managing self-healing function according to the example 6;
FIG. 7 is a flow chart of the method for managing self-healing function according to the example 7;
FIG. 8 is a structure schematic diagram of the apparatus for managing self-healing function in the examples according to the present invention.

### Preferred Embodiments of the Present Invention

In order to make the purpose, technical scheme and advantages of the present invention more clear, the present invention will be further described with reference to drawings and specific examples below.

To solve the management problem of self-healing function in the wireless network, the present invention proposes to add a resource model attribute in a mobile network management model, and control a use state of the self-healing function in the mobile network through the resource model attribute. Wherein the resource model attribute has recorded the self-healing function management information, and there are 4 implementation approaches for configuring the resource model attribute as follows, which specifically comprises configuring the resource model attribute on a network element and subnet, and the resource model attribute can be an Enable attribute or list attribute.

Approach 1: an Enable flag (shEnable) corresponding to self-healing function is added on a network element device object or network element level function object (such as RNC/NodeB and EnodeB); when needing to enable the self-healing function of the network element or entity unit under the network element, the flag is configured to be true; when needing to disable the self-healing function of the network element or entity unit under the network element, the flag is configured to be false; the configuration and query of the flag is supported on the northbound interface, and after the configuration is completed, the related self-healing function is promptly enabled or disabled. When querying according to object such as a network element and so on, the Enable condition of each self-healing function in each network element can be displayed through the state of each self-healing function flag.

For example, when needing to perform management on the self-healing function FuncA, one self-healing function control Enable attribute (sHFuncAEnabled) is added in a corresponding 3G network element (RNC/NodeB) resource model or LTE network element (ENodeB) resource model, wherein the use state of the self--healing function of the network element is configured, and if enabling the self-healing FuncA of RNC101, it can be implemented through the following way:
set RNC101. sHFuncAEnabled = True

If the self-healing function flag of the network element is enabled, the self-healing function flag of the unit under the network element will also be enabled correspondingly. Certainly, the NMS increases the control granularity on the network through configuring a corresponding self-healing function flag in other units of the network element. For example, the cell objects under a COC and RNCFunction can also add a self-healing function Enable.

Approach 2: a corresponding self-healing function management object (the object is an unique example under a subnet) is newly added under a management subnet, and an Enable flag of the self-healing function is configured in the object attribute. When needing to enable the corresponding self-healing function of the network, the flag is configured to be true; when needing to disable the self-healing function of the network, the flag is configured to be false; the configuration and query of the flag is supported on the northbound interface, and after the configuration is completed, the related self-healing function is promptly enabled or disabled, and if the self-healing function relates to various kinds of network elements, the operation performed on the Enable will influence multiple network elements in the subnet, and the Enable will only be set normally when the corresponding self-healing functions of all network elements supporting the function are enabled/disabled. When querying according to a subnet object, the Enable condition of each self-healing function in the subnet can be displayed through the state of each self-healing function flag.

For example, when needing to perform management on the self-healing function FuncB, one self-healing function management object sHFuncBFunction (self-healing function FuncB) is added in a management subnet (subnetwork), and the function Enable attribute is Enable. If the self-healing function FuncB under the subnet is configured to be enabled and the self-healing function FuncB of subnet 10 is enabled, it can be implemented through the following way:
set subnetwork10. sHFuncBFunction.Enable = True

When querying the self-healing function object FuncB under the subnet 10, if the Enable attribute of the sHFuncBFunction object is ture, it indicates that the self-healing function FuncB of subnet 10 has been enabled.

Approach 3: a corresponding self-healing function permission list EnabledSHList is added on a network element device object or network element level function object (e.g. RNC/NodeB and EnodeB); when needing to enable a certain self-healing function, a corresponding management item is added in the List; when needing to disable the self-healing function, the management item is deleted in the List; the configuration and query of the list is supported on the northbound interface, and after the configuration is completed, the corresponding self-healing function is enabled or disabled promptly according to the newly configured management item in the List. When querying according to object such as a network element and so on, the Enable condition of each self-healing function in each network element can be displayed through whether the list comprises a corresponding function item.

For example, one self-healing function permission list (EnabledSHList) attribute is added in a corresponding 3G network element (RNC/NodeB) resource model or LTE network element (ENodeB) resource model, and it is initialized to empty.

The self-healing function Enable of a certain network element is configured to be enabled or disabled, such as enabling the self-healing function C of RNC101, namely the EnabledSHList.add(FuncC), and querying the self-healing function list of the network element. If the EnabledSHList has a FuncC item, it indicates that the function has been enabled.

Approach 4: a subnet can also use a self-healing function permission list to perform management, and the specific processing process is similar to approach 3, which will not be repeated here.

It should be noted that any one of the above implementation approaches can be selected as a self-healing function management method in the same subnet. Preferably, the self-healing function is disabled under a default condition in the present invention, that is, a self-healing function Enable attribute is false in a default state, and a self-healing function management list is empty in the default state. Wherein the self-healing function Enable attribute can be a common attribute of a network element, and also can be a self-healing function object attribute under a subnet. In the practical application process, the self-healing function Enable attribute can perform the definition, such as reserving a field or extending a field, through the unused fields in the related art.

How to perform the management on the wireless network configured with the self-healing function management information is introduced below.

### Example 1

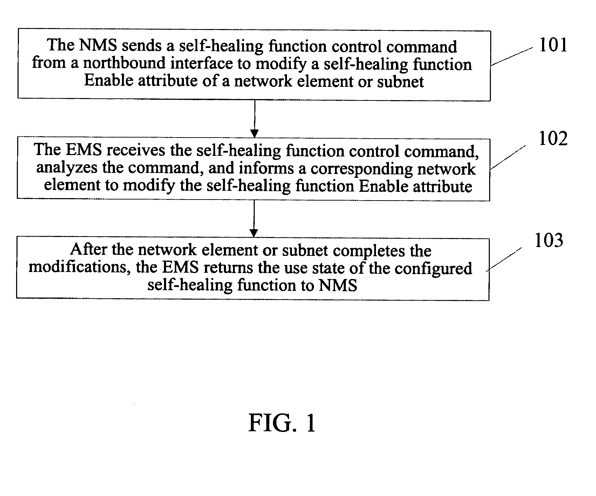

The example takes a NMS modifying a self-healing function use state as an example to perform the description as shown in FIG. 1.

Step 101, a NMS sends a self-healing function control command from a northbound interface to modify a self-healing function Enable attribute of a network element or subnet.

Step 102, an EMS receives the self-healing function control command, and then analyzes the command, and informs a corresponding network element to modify the self-healing function Enable attribute, which specifically comprises: if a self-healing function Enable is implemented in a network element common attribute, the self-healing function control command is sent to a corresponding network element, modifying a corresponding self-healing function in the network element through the network element, and the self-healing function Enable attribute of the network element is updated after the modification is completed; if the self-healing function Enable is implemented in a self-healing object attribute under a subnet, the self-healing function control command is sent to all the network elements which have the self-healing functions in the subnet, and the self-healing function Enable attribute corresponding to a subnet object is updated after all the network elements which have the self-healing functions complete the modifications.

Step 103, after the network element or subnet completes the modifications, the EMS returns the use state of the configured self-healing function to NMS, and the flow ends.

### Example 2

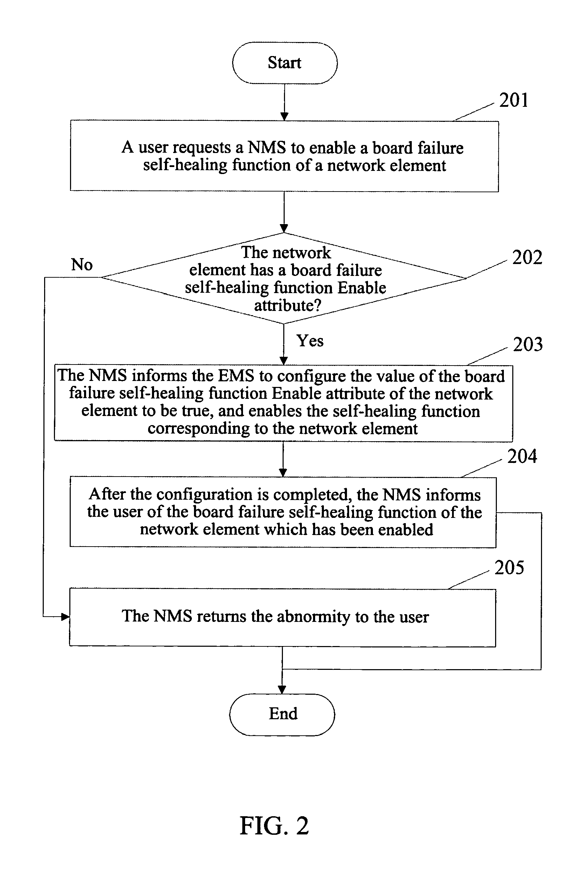

The example takes a modification of self-healing function use state of a network element as an example to perform the description as shown in FIG. 2.

Step 201, a user requests an NMS to enable a board failure self-healing function (sHBFSFuncEnabled) of a network element.

Step 202, the NMS queries an EMS about whether the network element has a board failure self-healing control attribute; if the network element has a board failure self-healing control attribute, proceed to steps 203-204, otherwise proceed to step 205.

Step 203, the NMS informs the EMS to configure the value of the network element sHBFSFuncEnabled to be true, and enables the self-healing function corresponding to the network element.

Step 204, after the configuration is completed, the NMS informs the user of the board failure self-healing function of the network element which has been enabled, and the flow ends.

Step 205, the NMS returns the abnormity to the user, and the flow ends.

### Example 3

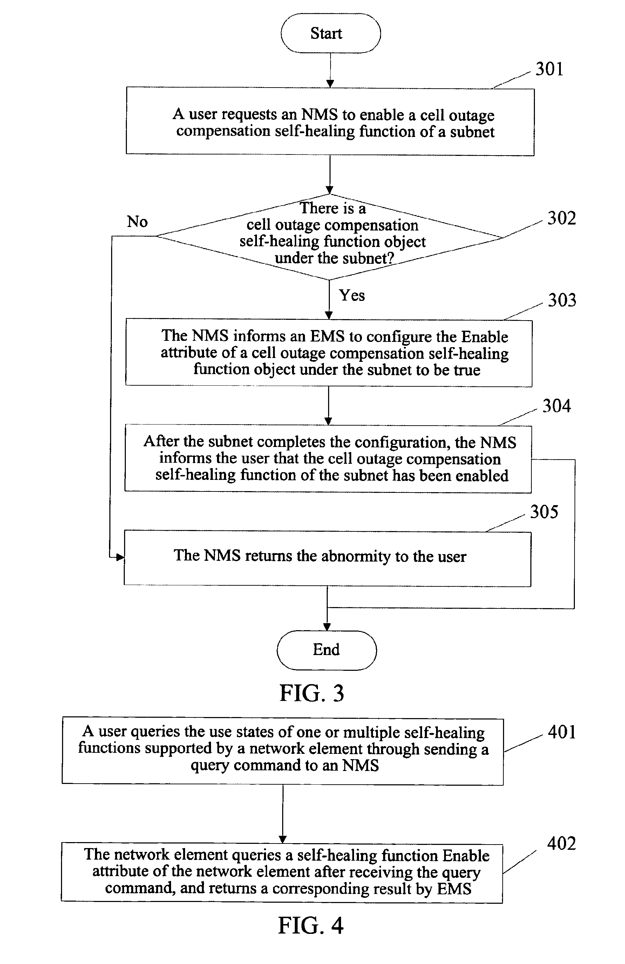

The example takes a modification of self-healing function use state of a subnet as an example to perform the description as shown in FIG. 3.

Step 301, a user requests an NMS to enable a cell outage compensation (COC) self-healing function (sHCOCFunction.Enable) of a subnet.

Step 302, the NMS queries the subnet about whether there is a COC self-healing function object under the subnet; if there is a COC self-healing function object under the subnet, proceed to steps 303-304, otherwise proceed to step 305.

Step 303, the NMS informs an EMS to configure the Enable attribute of the sHCOCFunction object under the subnet to be true.

Step 304, after the subnet completes the configuration, the NMS informs the user of the COC self-healing function of the subnet which has been enabled, and the flow ends.

Step 305, the NMS returns the abnormity to the user, and the flow ends.

### Example 4

The example takes a query of self-healing function of a network element as an example to perform the description as shown in FIG. 4.

Step 401, a user queries the use states of one or multiple self-healing functions supported by a network element through sending a query command to an NMS, and the query command comprises a query object and a self-healing function flag.

Step 402, the network element queries a self-healing function Enable attribute of the network element after receiving the query command, and returns a corresponding result; if the corresponding self-healing function Enable attribute of the network element is true, the function displays Enabled in the query result; if the self-healing function Enable attribute of the network element is false, the function displays Disabled in the query result.

### Example 5

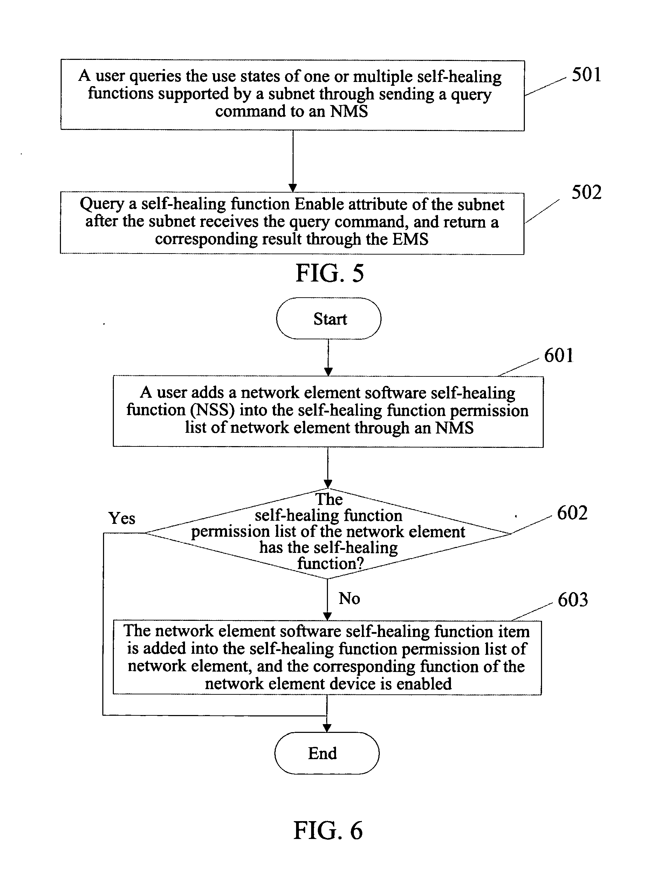

The example takes a query of self-healing function of a subnet as an example to perform the description as shown in FIG. 5.

Step 501, a user queries the use states of one or multiple self-healing functions supported by a subnet through sending a query command to an NMS, and the query command comprises a query object and a self-healing function flag.

Step 502, the subnet queries a self-healing function Enable attribute of the subnet after receiving the query command, and returns a corresponding result; if the Enable attribute of the corresponding self-healing object under the subnet is true, the function displays Enabled in the query result; if the Enable attribute of the corresponding self-healing object under the subnet is false, the function displays Disabled in the query result.

### Example 6

The example manages the self-healing function of a network element in a way of self-healing function permission list, and the specific process is shown in FIG. 6.

Step 601, a user adds a network element software self-healing function (NSS) into the self-healing function permission list EnabledSHList of a network element through an NMS.

Step 602, the NMS queries whether there is the self-healing function NSS in the self-healing function permission list of the network element, and if yes, proceed to step 603, otherwise proceed to step 604.

Step 603, if the self-healing function permission list comprises the self-healing function, return directly, and the flow ends.

Step 604, if the self-healing function permission list doesn't comprise the self-healing function, the NSS function item is added into the EnabledSHList, the corresponding function of the network element device is enabled, and the flow ends.

### Example 7

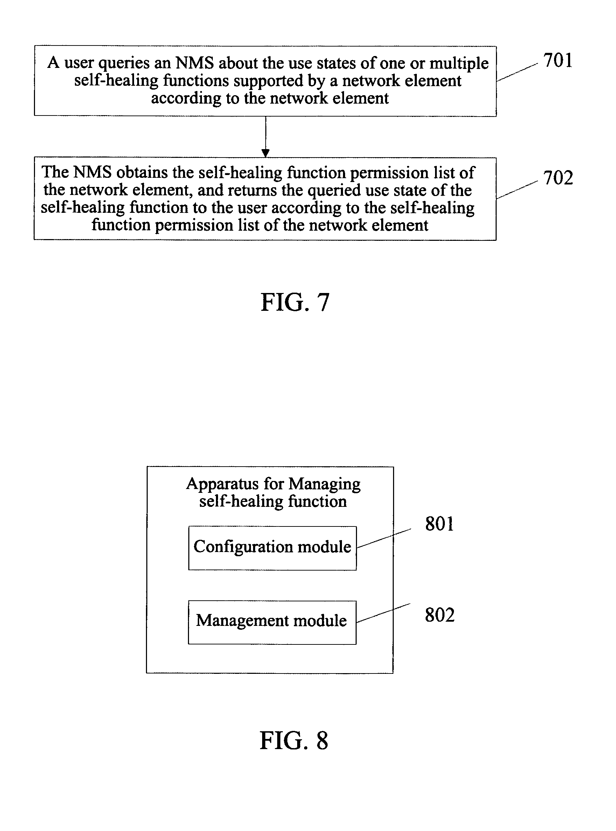

The example takes a query of self-healing function permission list of a network element as an example to perform the description, and the specific process is shown in FIG. 7.

Step 701, a user queries an NMS about the use states of one or multiple self-healing functions supported by a network element according to the network element, and a query command comprises a query object and a self-healing function flag.

Step 702, the NMS obtains the EnabledSHList of the network element, and returns the queried use state of the self-healing function to the user according to the EnabledSHList of the network element, and if the EnabledSHList of the network element comprises the self-healing function, the function displays Enabled in the query result, otherwise the function displays Disabled in the query result.

Correspondingly, the present invention provides an apparatus for managing self-healing function in the wireless network by using the above method, and as shown in FIG. 8, it comprises:
a configuration module 801, which is used for configuring a resource model attribute of the wireless network; and
a management module 802, which is used for controlling the on-off of self-healing function by using the resource model attribute.

The configuration module 801 configures a corresponding resource model attribute for a network element and/or subnet in the wireless network, and the management module 802 informs an EMS to modify a use state of the self-healing function after the configuration module 801 completes the configuration, and receives the updated use state of the self-healing function from EMS after the EMS informs the corresponding one or multiple network elements to complete the modification.

Furthermore, the configuration module 801 configures the corresponding resource model attribute through the following way, which comprises: configuring a self-healing function Enable attribute which has two values or recording a self-healing function permission list of the self-healing function which is in an enabled state.

If the resource model attribute configured by the configuration module 801 is a self-healing function Enable attribute, the management module 802 modifies the use state of the self-healing function through informing the EMS to replace the current value of the self-healing function Enable attribute with the other value;
if the resource model attribute configured by the configuration module 801 is a self-healing function permission list, the management module 802 modifies the use state of the self-healing function through informing the EMS to add or delete the self-healing functions in the self-healing function permission list.

Those skilled in the art can understand all or part of the steps for implementing the above examples can be completed through a program instructing the related hardware, and the program can be stored in a kind of computer readable memory medium. When running the program, one of the steps or a combination of the steps of the method examples is included.

Furthermore, each function unit in each example of the present invention can be implemented by using a form of hardware, and can also be implemented by using a form of software function module. If implemented in a form of software function module and sold or used as an independent product, the integrated module can also be stored in a computer readable memory medium.

The memory medium mentioned above can be a read-only memory, disk or optical disk, etc.

The above description is just the specific embodiments of the present invention, but the protection scope of the present invention is not limited to this, any person skilled in the art can easily think of changes and replacements within the technical scope disclosed by the present invention, and all these changes and replacements shall fall into the protection scope of the present invention. Therefore, the protection scope of the present invention should be subject to the protection scope described in the claims.

### Industrial Applicability

With the technical scheme provided by the present invention, a user can flexibly control the self-healing functions of the follow-up mobile network elements/mobile networks by managing the self-healing function attribute in a radio resource model, which makes the device function adapt to all kinds of application scenarios, satisfies different requirements of operational maintenance for the users, and has little influence on the existing wireless network management system of the 3GPP.

## Claims

1. A method for managing self-healing function in a wireless network, comprising:
a Network Management System (NMS) configuring a resource model attribute of the wireless network, and controlling on-off of the self-healing function through the resource model attribute.

2. The method according to claim 1, wherein, in the step of the NMS configuring the resource model attribute of the wireless network, the NMS configures a corresponding resource model attribute for a network element and/or subnet in the wireless network.

3. The method according to claim 2, wherein, the step of the NMS controlling the on-off of the self-healing function through the resource model attributes comprises:
the NMS informing a Network Element Management System (EMS) to modify a use state of the self-healing function;
if what the NMS modifies is the use state of the self-healing function in the network element, the EMS informing the network element to modify the use state of the self-healing function; and if what the NMS modifies is a use state modification of the self-healing function in the subnet, the EMS informing the subnet to modify the use state of the self-healing function;
after the network element or subnet completes modifications, the EMS informing the NMS of update results.

4. The method according to any one of claims 1 to 3, wherein, the step of the NMS configuring the resource model attribute of the wireless network comprises: configuring a self-healing function Enable attribute which has two values or recording a self-healing function permission list of the self-healing function which is in an enabled state.

5. The method according to claim 4, wherein, when the NMS adopts the self-healing function Enable attribute to perform management, the step of the NMS controlling the on-off of self-healing function through the resource model attribute comprises: the NMS modifying the use state of the self-healing function through informing the EMS to replace a current value of the self-healing function Enable attribute with the other value;
when the NMS adopts the self-healing function permission list to perform management, the step of the NMS controlling the on-off of self-healing function through the resource model attribute comprises: the NMS modifying the use state of the self-healing function through informing the EMS to add or delete the self-healing functions in the self-healing function permission list.

6. An apparatus for managing self-healing function in a wireless network, comprising:
a configuration module, which is configured to: configure a resource model attribute of the wireless network; and
a management module, which is configured to: control on-off of the self-healing function through the resource model attribute.

7. The apparatus according to claim 6, wherein, the configuration module is configured to: configure a corresponding resource model attribute for a network element and/or subnet in the wireless network.

8. The apparatus according to claim 7, wherein,
the management module is configured to: inform an EMS to modify a use state of the self-healing function, and receive a updated use state of the self-healing function from the EMS after the EMS informs corresponding one or multiple network elements to complete modifications.

9. The apparatus according to any one of claims 6 to 8, wherein, the configuration module is configured to configure the resource model attribute through following ways: configuring a self-healing function Enable attribute which has two values or recording a self-healing function permission list of the self-healing function which is in an enabled state.

10. The apparatus according to claim 9, wherein,
if the resource model attribute configured by the configuration module is the self-healing function Enable attribute, the management module is configured to: modify the use state of the self-healing function through informing the EMS to replace a current value of the self-healing function Enable attribute with the other value;
if the resource model attribute configured by the configuration module is the self-healing function permission list, the management module is configured to: modify the use state of the self-healing function through informing the EMS to add or delete the self-healing functions in the self-healing function permission list.
